# EUROPÄISCHE PATENTANMELDUNG

(11) **EP 0 570 813 A2**
(43) Veröffentlichungstag der Anmeldung: **24.11.1993**
(21) Anmeldenummer: 93107645.9
(22) Anmeldetag: 11.05.1993
(51) Int. Cl.: H04L 12/56

(54) **Verfahren und Schaltungsanordnung zum Wiederherstellen der richtigen Anzahl von ATM-Zellen**

(30) Priorität: 22.05.1992 DE 4217003
(71) Anmelder: Alcatel SEL Aktiengesellschaft, D-70435 Stuttgart (DE); ALCATEL N.V., NL-1077 XX Amsterdam (NL)
(72) Erfinder: Kaminski, Stephen, W-7260 Calw (DE); Frohberg, Wolfgang, Dr., W-7000 Stuttgart 40 (DE)
(74) Vertreter: Brose, Gerhard

(57) **Zusammenfassung**

Technisches Problem: Bei Tests wird fehlerhaftes Verhalten aufgezwungen. Fehler müssen rekonstruiert und analysiert werden. Besonders problematisch sind fehlgeleitete (verlorengegangene oder hinzugekommene) Zellen.

Grundgedanke: Die Zellen erhalten fortlaufende Zellfolgenummern, anhand derer verlorengegangene oder hinzugekommene Zellen empfangsseitig erkannt werden. Verlorengegangene Zellen werden durch andere Zellen ersetzt, hinzugekommene werden entfernt.

Beispiel: Alle zu einer Verbindung gehörenden Zellen werden in einer Art Silospeicher zwischengespeichert. Bei Störung der fortlaufenden Numerierung wird geprüft, ob später die ursprüngliche Folge wieder fortgesetzt wird (bei eingefügten Zellen) oder eine wenigstens in sich stimmige Folge zu finden ist (bei verlorenen Zellen).

## Beschreibung

Die Erfindung betrifft ein Verfahren und eine Schaltungsanordnung zum Wiederherstellen der richtigen Anzahl von Zellen einer gestörten ATM-Verbindung.

Für die Entwicklung des zukünftigen ATM-Netzes (ATM = Asynchronous Transfer Mode) sind die Vorgaben sehr streng. Um diese sehr strengen Vorgaben zu erfüllen, sind unter anderem auch aufwendige und gründliche Tests notwendig. Bei solchen Tests werden Fehler aufgezwungen, um die Reaktion des Systems zu prüfen und Schwachpunkte zu entdecken. Auftretende Fehler sollen dabei nicht nur festgestellt, sondern auch rekonstruiert und analysiert werden. Besonders problematisch sind dabei fehlgeleitete Zellen.

Fehlleitungen von Zellen sind meist Folgen von Fehlern im Zellkopf, der unter anderem diejenige Information enthält, die für die richtige Wegewahl benötigt wird. Ist diese Information trotz der mitgegebenen Redundanz nicht mehr richtig auswertbar, so kann die betroffene Zelle entweder überhaupt nicht mehr weitergeleitet werden oder sie wird fehlgeleitet. Innerhalb einer ATM-Verbindung können damit sowohl einzelne Zellen verlorengehen als auch einzelne Zellen hinzukommen. Erschwerend kommt hinzu, daß damit zu rechnen ist, daß Fehler gehäuft auftreten, wenn sie überhaupt auftreten. Im Gegensatz zu Störungen des Inhalts einzelner Zellen haben verlorengegangene oder hinzugekommene Zellen oft einen Verlust der Synchronisation zur Folge, wodurch dann auch ein Großteil der fehlerfrei übertragenen Zellen nicht mehr verwertbar ist.

Wegen des möglichen Verlusts der Synchronisation besteht nicht nur bei Testsystemen, sondern auch bei manchen Anwendungen der Wunsch, die Auswirkungen fehlgeleiteter Zellen zu reduzieren. Als Beispiel werden Videoübertragungen genannt. Wenngleich hier die Auswirkungen nicht so schwerwiegend sind wie bei der Durchführung von Tests, sind hier die Anforderungen an irgendwelche Korrekturschaltungen möglicherweise noch höher. Bei Videoübertragungen muß zwingend im Echtzeitbetrieb gearbeitet werden, wenn auch eine geringe zusätzliche Verzögerung zumindest bei Übertragung nur in einer Richtung unschädlich ist. Die Auswertung durchgeführter Tests muß dagegen nicht immer zwingend in Echtzeit erfolgen. Auch ist in der Regel die Übertragungskapazität einer Videoverbindung höher als die einer Testverbindung.

Die vorliegende Erfindung ist entstanden bei Arbeiten an einer Schnittstelleneinrichtung für ATM-Testgeräte, sie ist aber nicht auf diese Anwendung beschränkt.

Das vorgenannte Problem wird gemäß der Erfindung gelöst durch ein Verfahren nach der Lehre des Anspruchs 1 und eine Schaltungsanordnung nach der Lehre des Anspruchs 5.

Gemäß der Erfindung erhalten die Zellen sendeseitig fortlaufende Zellfolgenummern, anhand derer empfangsseitig verlorengegangene oder hinzugekommene Zellen erkannt werden. Verlorengegangene Zellen werden durch andere Zellen ersetzt, hinzugekommene werden entfernt.

Weitere Ausgestaltungen der Erfindung sind den Unteransprüchen zu entnehmen.

Im folgenden wird die Erfindung anhand eines Ausführungsbeispiels unter Zuhilfenahme der beiliegenden Zeichnungen weiter erläutert.
- Fig. 1: zeigt ein Blockschaltbild einer erfindungsgemäßen Schaltungsanordnung,
- Fig. 2: zeigt eine Schaltung für die Vorhersage der Verzögerung für die Schaltungsanordnung nach Fig. 1.

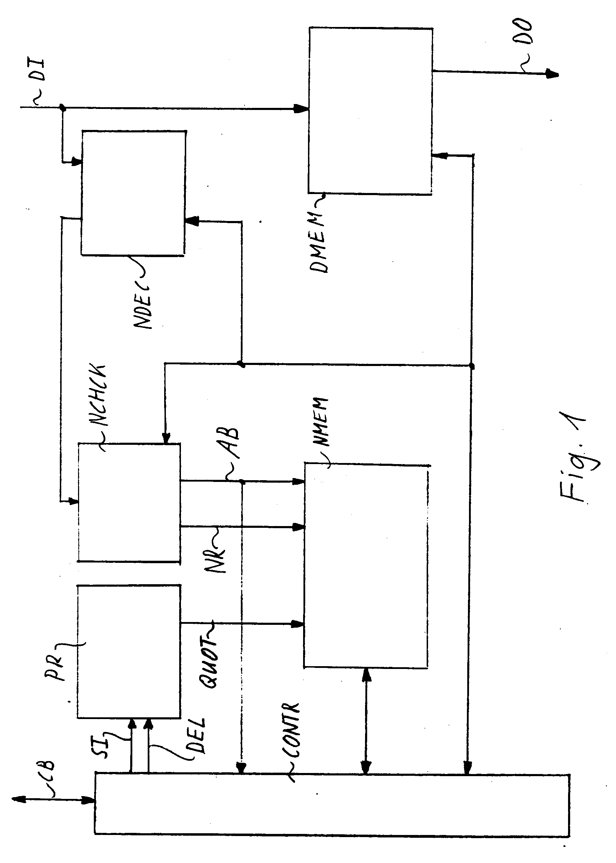

Ein Blockschaltbild einer erfindungsgemäßen Schaltungsanordnung ist in Fig. 1 dargestellt. Die gezeigte Schaltungsanordnung weist einen Datenspeicher DMEM, einen Nummernspeicher NMEM, einen Nummerndecodierer NDEC, einen Nummernprüfer NCHCK, eine Vorhersageschaltung PR und eine Steuerung CONTR auf.

Der zu behandelnde Zellstrom tritt über einen Dateneingang DI in die Schaltungsanordnung ein und verläßt diese über einen Datenausgang DO. Die Steuerung CONTR empfängt und sendet Steuerinformationen über einen Steuerbus CB.

Die dem vorliegenden Ausführungsbeispiel zugrunde liegende Schaltungsanordnung ist Bestandteil eines Testsystems. Dieses meldet über den Steuerbus CB an die Steuerung CONTR, wenn eine zu übernehmende Zelle am Dateneingang DI anliegt. Dabei wird vom Testsystem jede Zelle als zu übernehmen gemeldet, deren Zellkopf anzeigt, daß sie zu dem zu behandelnden Zellstrom gehört.

Liegt eine zu übernehmende Zelle an, so wird von der Steuerung CONTR veranlaßt, daß diese in den Datenspeicher DMEM übernommen wird. Bei der Ausführung als Schnittstelleneinrichtung für ATM-Testgeräte ist der Datenspeicher DMEM so dimensioniert, daß er 21 vollständige Zellen aufzunehmen vermag. Die Zellen liegen am Dateneingang DI in Form von Oktetten (byteweise) an und werden so auch abgespeichert. Von der Steuerung CONTR wird hierzu zunächst eine Anfangsadresse und dann im Bytetakt folgend je eine Folgeadresse sowie jeweils ein Einschreibbefehl an den Datenspeicher DMEM angelegt. Der Bytetakt wird über den Steuerbus CB zugeführt. Der Datenspeicher DMEM wird beim Einschreiben zyklisch adressiert.

Die erfindungsgemäß verwendete Zellfolgenummer ist codiert im dritten und vierten dem Zellkopf folgenden Byte als 15-Bit-Wort enthalten. Die Steuerung CONTR aktiviert den Nummerndecodierer NDEC, wenn diese Bytes am Dateneingang DI anliegen. Der Nummerndecodierer NDEC übernimmt die kodierte Zellfolgenummer und decodiert sie zu einer 8-Bit-Nummer.

Die Decodierung erfolgt in einem EPROM vom Typ 27C512, an dessen Adresseingänge die codierte Zellfolgenummer angelegt wird und an dessen Datenausgängen die decodierte Nummer abgegriffen wird.

Zur Codierung ist hier ein Nordstrom-Robinson-Code verwendet. Bei diesem Code wird zunächst das codiert zu übertragende Datenwort
C0, C1, C2, C3, C4, C5, C6, C7
unverändert übertragen und dann von einer Reihe von Sicherungsbits gefolgt, so daß das codierte Datenwort den Aufbau
C0, C1, C2, C3, C4, C5, C6, C7, S0, S1, S2, S3, S4, S5, S6
hat. Die Sicherungsbits sind wie folgt gebildet:
- S0 =: C7+C6+C0+C1+C3+(C0+C4)
&(C1+C2+C3+C5)+(C1+C2)&(C3+C5)
- S1 =: C7+C0+C1+C2+C4+(C1+C5)
&(C2+C3+C4+C6)+(C2+C3)&(C4+C6)
...
- S6 =: C7+C5+C6+C0+C2+(C6+C3)
&(C0+C1+C2+C4)+(C0+C1)&(C2+C4),
wobei die Bildung der Sicherungsbits, ausgehend von S0, durch zyklische Erhöhung des Index x der Datenbits Cx modulo 7 erfolgt, außer für C7. Das "+"-Zeichen steht für die logische Und-Verknüpfung; das "&"-Zeichen steht für die logische Oder-Verknüpfung; die Oder-Verknüpfung hat Vorrang vor der Und-Verknüpfung.

Diese Art der Codierung gewährleistet eine eindeutige Zuordnung zum ursprünglichen Datenwort selbst dann noch, wenn bis zu zwei der 15 Bits des codierten Datenworts verfälscht sind. Damit wird erreicht, daß bei Störungen, die zu Fehlleitungen von Zellen führen, die Zellfolgenummer immer noch mit einiger Wahrscheinlichkeit ermittelt und zum erfindungsgemäßen Wiederherstellen der richtigen Anzahl von Zellen herangezogen werden kann.

Zum Programmieren des im Nummerndecodierer NDEC zum Decodieren verwendeten EPROMs sind für sämtliche möglichen 15-Bit-Worte die zugehörigen unverfälschten ursprünglichen uncodierten Datenworte zu ermitteln und damit das EPROM zu programmieren, wobei das jeweilige 15-Bit-Wort die Adresse und das zugehörige Datenwort den einzuprogrammierenden Inhalt ergibt.

Dabei ist so vorzugehen, daß für jede Zellfolgenummer, vorzugsweise in aufsteigender Reihenfolge von 0 bis 255, zunächst das 8-Bit-Datenwort, dann das codierte 15-Bit-Wort in unverfälschter Form, dann in den 15 möglichen Formen mit einem Bitfehler und zuletzt in allen möglichen Formen mit zwei Bitfehlern ermittelt wird.

Bei diesem systematischen Vorgehen, das prinzipiell von Hand, schneller und sicherer aber per Programm erfolgen kann, werden nicht alle 15-Bit-Worte erreicht. Die übrigen treten nur auf, wenn mindestens drei Bits verfälscht sind. Hier ist entweder eine willkürliche Zuordnung zu einer der infrage kommenden Zellfolgenummern möglich oder es kommt die Zuordnung zu einer sonst nicht zugelassenen Zellfolgenummer in Frage. Dies könnte die Nummer 0 oder die Nummer 255 sein. Deren Auftreten würde dann grundsätzlich als Fehler zu werten sein. Im Fall der eingangs erwähnten Schnittstelleneinrichtung für ATM-Testgeräte wird dies so gehandhabt. Eine Zelle mit einem solchen Fehler wird dabei wie eine fehlerhaft hinzugekommene Zelle behandelt.

Die im Nummerndecodierer NDEC decodierte Zellfolgenummer wird, gesteuert von der Steuerung CONTR, in den Nummernprüfer NCHCK übernommen. Der Nummernprüfer NCHCK stellt nur fest, ob die aktuelle Zellfolgenummer zur vorangegangenen paßt oder nicht. Wird aufgrund dieser Nummernprüfung festgestellt, daß möglicherweise eine Fremdzelle vorliegt, so wird dies durch das Setzen eines Fremdzellenbits ("alien bit") AB gekennzeichnet. Das Fremdzellenbit wird zusammen mit der Zellfolgenummer NR selbst im Nummernspeicher NMEM abgespeichert.

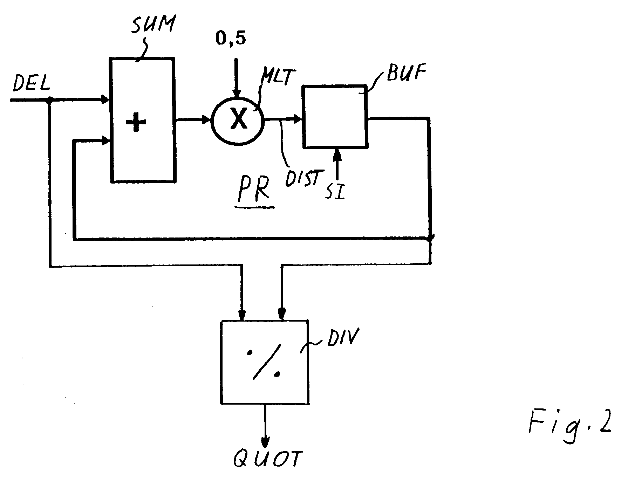

Außerdem wird in der Vorhersageschaltung PR noch zu jeder empfangenen Zelle ein Quotient QUOT ermittelt. Hierzu wird ein mittlerer Zellabstand mit dem aktuellen Zellabstand verglichen. Der Quotient QUOT gibt also an, wieviele Zellen seit der zuvor empfangenen Zelle bis zu der aktuell empfangenen Zelle zu erwarten gewesen waren. Dies wird weiter unten anhand der Fig. 2 näher erläutert werden. Auch dieser Quotient QUOT wird im Nummernspeicher NMEM abgespeichert, und zwar als 7-Bit-Wort.

Jeweils ein Satz aus einer Zellfolgenummer NR, einem Fremdzellenbit AB und einem Abstand DIST wird als 16-Bit-Wort im Nummernspeicher NMEM abgespeichert. Dieser ist als handelsüblicher Speicher mit der Dimension 1Kx16 ausgeführt. Die Zuordnung zwischen einer Zelle im Datenspeicher DMEM und den zugehörigen Angaben im Nummernspeicher NMEM sowie das Ablegen in der Reihenfolge des Eingangs der Zellen wird durch die Steuerung CONTR gewährleistet.

Damit sind alle Voraussetzungen geschaffen, um Fehler in der Aufeinanderfolge der Zellen erkennen und beheben zu können. Dies wird im folgenden näher beschrieben.

Vorher wird jedoch anhand der Fig. 2 die verwendete Vorhersageschaltung PR kurz beschrieben.

Die Vorhersageschaltung DLPR weist einen Addierer SUM, einen Multiplizierer MLT, einen Pufferspeicher BUF und einen Dividierer DIV auf. Die Vorhersageschaltung PR erhält von der Steuerung CONTR einen Schaltimpuls SI und den aktuellen Verzögerungswert DEL, der den Abstand der gerade empfangenen Zellen von der vorangegangenen anzeigt.

Der Addierer SUM addiert den aktuellen Verzögerungswert DEL zu dem für die vorangegangene Zelle ermittelten zu erwartenden Abstand DIST hinzu. Dieser wurde hierzu, ausgelöst durch den Schaltimpuls SI, in dem Pufferspeicher BUF zwischengespeichert. Das Ergebnis der Addition wird im Multiplizierer MLT mit dem Faktor 0,5 multipliziert, d.h. halbiert. Der ermittelte Wert für den zu erwartenden Abstand DIST ist damit das Mittel aus dem aktuellen Verzögerungswert DEL und dem vorangegangenen Abstand DIST, der wiederum Anteile aller vorangegangener Verzögerungswerte enthält. Der Dividierer DIV teilt dann den aktuellen Verzögerungswert DEL durch den im Pufferspeicher BUF zwischengespeicherten vorangegangenen Abstand DIST und gibt den Quotienten QUOT als ganze Zahl weiter.

Im Prinzip könnte auch eine anders wichtende Mittelwertbildung durch eine dann entsprechend anders aufgebaute Vorhersageschaltung realisiert werden.

Die Ausgabe von Zellen über den Datenausgang D0 wird von der Steuerung CONTR veranlaßt. Dies wird im folgenden anhand der Fig. 1 beschrieben.

Der Zeitpunkt, zu dem wieder eine Zelle am Datenausgang D0 ausgegeben werden soll, wird von außen über den Steuerbus CB vorgegeben.

Zur Vorbereitung der Ausgabe der nächsten Zelle wird von der Steuerschaltung CONTR der nächste Speicherinhalt im Nummernspeicher NMEM gelesen. Zeigt das Fremdzellenbit AB an, daß bereits die Prüfung im Nummernprüfer NCHCK eine korrekte Zellfolge ergeben hat, so kann ohne weitere Prüfung die nächste im Datenspeicher DMEM enthaltene Zelle ausgegeben werden.

Zeigt das Fremdzellenbit AB an, daß die nächste Zelle im Datenspeicher DMEM nicht auch die nächste Zelle im Datenstrom ist, so müssen noch weitere Zellen anhand der im Nummernspeicher NMEM enthaltenen Daten überprüft werden. Diese Prüfung muß nun anhand der mit abgespeicherten Zellfolgenummer NR erfolgen. Ausgehend von der Zellfolgenummer der zuletzt ausgegebenen Zelle wird der Fortgang der Zellfolgenummernserie gesucht.

Ist eine Zelle oder sind einige wenige Zellen hinzugekommen, so äußert sich dies dadurch, daß die unterbrochene Folge von Zellfolgenummern danach wieder korrekt fortgesetzt wird. Diese korrekte Fortsetzung kann durch einfaches Überprüfen der im Nummenspeicher abgespeicherten Zellfolgenummern NR festgestellt werden. Ist die korrekte Fortsetzung gefunden, so wird mit der Ausgabe aus dem Datenspeicher DMEM an der zugehörigen Stelle fortgefahren. Übersprungene Zellen bleiben unberücksichtigt.

Ist eine Zelle oder sind einige wenige Zellen verlorengegangen, so äußert sich dies dadurch, daß die Folge von Zellfolgenummern um eine Nummer oder um einige wenige Nummern versetzt wieder korrekt fortgesetzt wird. Auch dies kann durch Überprüfen der im Nummernspeicher abgespeicherten Zellfolgenummern NR festgestellt werden. Aus der Anzahl der fehlenden Zellfolgenummern kann auch die Anzahl der verlorengegangenen Zellen unmittelbar ermittelt werden. Entsprechend der Anzahl der verlorengegangenen Zellen wird die letzte korrekte Zelle mehrmals ausgegeben, bis wieder eine korrekte Zelle vorliegt.

Anstelle der mehrmaligen Ausgabe der letzten korrekten Zelle sind auch andere Korrekturmöglichkeiten gegeben:
- Es kann jeweils eine irgendwie geartete neutrale Zelle ausgegeben werden. Diese kann als solche unter einer sonst nicht verwendeten Adresse im Datenspeicher enthalten sein und wie jede andere Zelle ausgegeben werden.
- Es können Zellen eingefügt werden, die die Tatsache und gegebenenfalls die Anzahl fehlender Zellen angeben.
- Anstelle der fehlenden Zellen können durch Interpolation gewonnene Zellen eingefügt werden. Dies ist allerldings nur unter bestimmten Voraussetzungen sinnvoll und erfordert auch zusätzlichen Aufwand.

Wird anhand der Zellfolgenummern NR festgestellt, daß eine bestimmte Anzahl von Zellen verlorengegangen sein muß, so wird diese Feststellung noch durch Vergleich dieser ermittelten Anzahl mit dem für die nächste Zelle abgespeicherten Quotienten QUOT überprüft. Weichen diese beiden Werte zu weit voneinander ab, so deutet dies auf größere Störungen hin. In diesem Fall sind auch die nachfolgenden Zellen mit zu überprüfen, ob die Folge jetzt wirklich korrekt weiterläuft. Außerdem kann dann das Einfügen irgendwelcher Korrekturzellen unterbleiben.

Unter Umständen kann die korrekte Weiterführung einer gestörten Zellfolge nicht aufgefunden werden. In diesem Fall wird versucht, wenigstens wieder eine in sich stimmige Folge von Zellfolgenummern zu finden und mit dieser die Ausgabe fortzusetzen.

Da Fehler bevorzugt gehäuft auftreten, sollten bevorzugt noch weitere Überprüfungen durchgeführt werden. Hierzu gehört, die Folge der Zellfolgenummern so weit wie möglich über die nächste auszugebende Zelle hinaus zu überprüfen. Gegebenenfalls können dabei nach einer aufgefundenen korrekten Weiterführung einer gestörten Folge die Fremdzellenbits wieder geändert (gelöscht) werden.

Der beschriebene Ablauf sowie die Zuordnung der verschiedenen Funktionen auf die einzelnen Schaltungsteile sind nur beispielhaft zu verstehen.

Abschließend wird noch darauf hingewiesen, daß durch das erfindungsgemäße Verfahren und die erfindungsgemäße Schaltungsanordnung zwangsläufig Parameter ermittelt werden, durch die die Übertragungsgüte einer ATM-Verbindung charakterisiert werden kann. Eine Anwendung als Meßverfahren oder Meßschaltung beispielsweise für Zellverluste oder Delay Jitter ist auf einfache Weise möglich.

## Patentansprüche

1. Verfahren zum Wiederherstellen der richtigen Anzahl von Zellen einer gestörten ATM-Verbindung,
**dadurch gekennzeichnet,** daß sendeseitig die Zellen einer Verbindung fortlaufende Zellfolgenummern (NR) erhalten, daß empfangsseitig anhand der Zellfolgenummern verlorengegangene oder hinzugekommene Zellen erkannt werden, daß verlorengegangene Zellen durch andere Zellen ersetzt und daß hinzugekommene Zellen entfernt werden.

2. Verfahren nach Anspruch 1, dadurch gekennzeichnet, daß empfangsseitig eine Anzahl von Zellen zwischengespeichert wird, daß solche Zellen entfernt werden, deren Zellfolgenummern nicht zu den Zellfolgenummern der vorausgegangenen und folgenden Zellen passen und daß dann, wenn eine Folge von Zellfolgenummern abgebrochen wird und darauf eine andere, in sich stimmige Folge von Zellfolgenummern folgt, so viele Zellen eingefügt werden, daß die Lücke geschlossen ist.

3. Verfahren nach Anspruch 1, dadurch gekennzeichnet, daß die Zellfolgenummern derart kodiert sind, daß eine Fehlererkennung und Fehlerkorrektur möglich ist.

4. Verfahren nach Anspruch 1, dadurch gekennzeichnet, daß empfangsseitig zu jeder empfangenen Zelle ein Vorhersagewert (DIST) für den Zeitpunkt des Empfangs der nächsten Zelle ermittelt und bei einer gestörten Folge empfangener Zellfolgenummern zur Behebung der Störung mit herangezogen wird.

5. Schaltungsanordnung zum Wiederherstellen der richtigen Anzahl von Zellen einer gestörten ATM-Verbindung,
**dadurch gekennzeichnet,** daß eine Vergleichseinrichtung (NCHCK) vorhanden ist, die laufend eine erwartete Zellfolgenummer bereitstellt, diese mit der Zellfolgenummer einer empfangenen Zelle vergleicht und das Vergleichsergebnis der empfangenen Zelle zuordnet, und daß eine Steuereinrichtung (CONTR) vorhanden ist, die zusätzlich empfangene Zellen entfernt und anstelle fehlerhaft nicht empfangener Zellen andere einfügt.
